(19) Europäisches Patentamt
European Patent Office
Office européen des brevets

(11) EP 3 524 052 B1

(12) EUROPEAN PATENT SPECIFICATION

(45) Date of publication and mention of the grant of the patent:
**17.03.2021 Bulletin 2021/11**

(51) Int Cl.:
***A01N 25/32** (2006.01)* ***A01N 43/54** (2006.01)*
***A01N 43/653** (2006.01)* ***A01P 3/00** (2006.01)*

(21) Application number: **18156145.7**

(22) Date of filing: **09.02.2018**

(54) **THE USE OF A FUNGICIDAL MIXTURE TO REDUCE THE PHYTOTOXICITY OF EACH INDIVIDUAL FUNGICIDE**

DIE VERWENDUNG EINER FUNGIZIDMISCHUNG ZUR VERRINGERUNG DER PHYTOTOXIZITÄT JEDES EINZELNEN FUNGIZIDS

L'UTILISATION D'UN MÉLANGE FONGICIDE POUR RÉDUIRE LA PHYTOTOXICITÉ DE CHAQUE FONGICIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.08.2019 Bulletin 2019/33**

(73) Proprietor: **Rotam Agrochem International Company Limited**
**Hong Kong (HK)**

(72) Inventor: **BRISTOW, James Timothy**
**Chai Wan, Hong Kong N/A (CN)**

(74) Representative: **Akers, Noel James**
**N.J. Akers & Co**
**63 Lemon Street**
**Truro, Cornwall TR1 2PN (GB)**

(56) References cited:
**WO-A1-98/47367**
**WO-A1-2012/021214**
**WO-A1-2014/082950**
**WO-A1-2015/062358**
**WO-A1-2015/139564**
**CN-A- 104 621 130**
**CN-A- 106 889 091**
**US-B2- 8 637 534**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to the use of the fungicidal combination of azoxystrobin and prothioconazole in the weight ratio greater than 1:1, preferably from 1.1:1 to 3:1, to reduce the phytotoxicity of the individual fungicides.

Undesired fungal infestation in crop plants causes significant reductions in the yield of the plants. As a result, the control of the undesired fungal infestation is important in obtaining high productivity in crops and is a continual objective in the agricultural field.

Azoxystrobin, having the IUPAC name methyl (E)-2-{2-[6-(2-cyanophenoxy)pyrimidin-4-yloxy]phenyl}-3-methoxyacrylate, has the following structural formula (I):

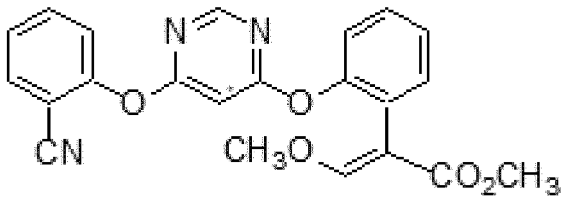

(I).

Azoxystrobin belongs to the strobilurin group of chemicals, which are known to exhibit fungicide activity and find particular use in the control of a range of fungal diseases including brown rust, tan spot, powdery mildew and net blotch in cereals, pulses and oilseed crops. Azoxystrobin is a preventive and curative fungicide with systemic and translaminar movement, acting by the inhibition of mitochondrial respiration by blocking electron transfer at the Qo centre of cytochrome Bc1.

Prothioconazole, having the IUPAC name 2-[2-(1-chlorocyclopropyl)-3-(2-chlorophenyl)-2-hydroxypropyl]-2,4-dihydro-1,2,4-triazole-3-thione, having following structural formula (II):

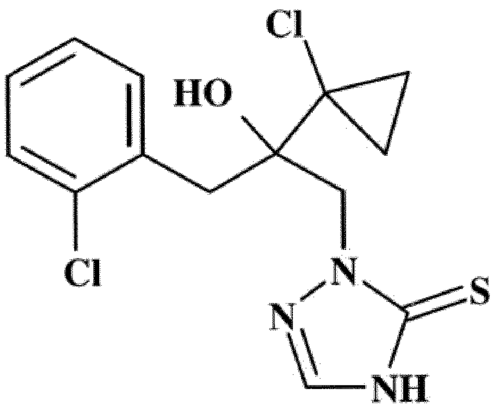

(II).

Prothioconazole is a synthetic compound of the triazole family of compounds, which are a class of systemic fungicides that enter the plant and spread from the site of application to untreated or newly grown area, uprooting existing fungi or protecting the plant from future attacks. The action of prothioconazole and the related triazole compounds relies on their ability to interfere with the biosynthesis of biosteroids or to inhibit the biosynthesis of ergosterol. Ergosterol is required for membrane structure and function and is essential for the development of functional cell walls by fungi. The application of triazoles results in abnormal fungal growth and eventual death

The combination of prothioconazole and azoxystrobin is well known, for example, from CN104621130, CN106889091 and WO21012021214. WO9847367 also teaches that the combination provides a synergistic fungicidal effect.

However, the use of prothioconazole is not without problems. As disclosed in WO 2009/000407 prothioconazole may cause phytotoxic damage to some plants when used at its customary application rates for controlling unwanted fungi. This phytotoxic effect can be observed in particular in situations when the plant is under stress, such as drought, or when prothioconazole is used in high concentration. A study in 2004 also shows that prothioconazole is phytotoxic to certain crops, including cucumber, sunflower, tomato and soybean (Sabbert, T.J , 2004, 'Tier I Seedling Emergence and Vegetative Vigor Non-Target Phytotoxicity Study Using JAU 6476 480SC', PMRA Submission No.: 2004-0844).

Azoxystrobin is also found to give rise to phytotoxic effects when used, in particular damage to some specific fruit plants, especially to some apple varieties (Win Cowgill, et el, 'Not Understanding Phytotoxicity Can Damage Your Bottom Line'; Fruit Notes, Volume 78, Summer, 2013).

"Phytotoxicity" in the context of the present invention and as used in the present specification is a reference to any effect of a fungicide that hinders the ordinary development of a crop plant. Phytotoxic effects of a fungicide may reduce the growth of a crop plant and may even cause its death. Therefore, fungicidal compounds exhibiting low or no phytotoxic effects are desirable to maintain healthy crop plants.

It has now surprisingly been found that using prothioconazole and azoxystrobin in combination results in a reduction of the phytotoxic effects of both azoxystrobin and prothioconazole. The reduction in phytotoxicity of prothioconazole and azoxystrobin is particularly effective on crop plants, such as soybean, sunflower, tomato, cucumber and apple. This reduction in phytotoxicity is achieved without reducing the effectiveness of the two aforementioned compounds in the control of the undesired fungal infection.

Therefore, the present invention provides a method for reducing the phytotoxicity of prothioconazole, the method comprising employing the prothioconazole in combination with azoxystrobin, wherein the weight ratio of azoxystrobin to prothioconazole is greater than 1:1, preferably 1.1:1 to 3:1.

In a further aspect, the present invention provides a method for reducing the phytotoxicity of azoxystrobin, the method comprising employed azoxystrobin in combination with prothioconazole, wherein the weight ratio of azoxystrobin to prothioconazole is greater than 1:1, preferably 1.1:1 to 3:1.

Still further, the present invention provides the use of prothioconazole to reduce the phytotoxicity of azoxystrobin, wherein the weight ratio of azoxystrobin to prothioconazole is greater than 1:1, preferably 1.1:1 to 3:1.

Further still, the present invention provides the use of azoxystrobin to reduce the phytotoxicity of prothioconazole, wherein the weight ratio of azoxystrobin to prothioconazole is greater than 1:1, preferably 1.1:1 to 3:1.

The composition for use in the present invention comprises:

A) prothioconazole; and

B) azoxystrobin, wherein the weight ratio of azoxystrobin to prothioconazole is greater than 1:1, preferably 1.1:1 to 3:1.

Prothioconazole may be present in the composition in any suitable amount to provide the required fungicidal activity and the required reduction in the phytotoxicity of azoxystrobin to the plants being protected, as long as the weight ratio of azoxystrobin to prothioconazole is greater than 1:1, preferably 1.1:1 to 3:1. Prothioconazole is preferably present in the composition in an amount of at least 3% by weight, more preferably at least 5%, still more preferably at least 10%, more preferably at least 20% by weight.

Azoxystrobin may be present in the composition in any suitable amount to provide the required fungicidal activity and the required reduction in the phytotoxicity of prothioconazole to the plants being protected, as long as the weight ratio of azoxystrobin to prothioconazole is greater than 1:1, preferably 1.1:1 to 3:1. Azoxystrobin is preferably present in the composition in an amount of at least 3% by weight, more preferably at least 5%, still more preferably at least 10%, more preferably at least 20% by

The fungicidal composition may further contain one or more agriculturally acceptable auxiliaries. The auxiliaries employed in the composition and their amounts will depend upon the type of formulation and/or the manner in which the formulation is to be applied by the end user. Suitable auxiliaries are customary formulation adjuvant or components, such as dispersants, wetting agents, extender, carriers, solvents, surfactants, stabilizers, anti-foam agents, anti-freeze agents, preservatives, antioxidants, colorants, thickeners, solid adherents and inert fillers. Such auxiliaries are known in the art and are commercially available. Their use in the formulation of the compositions of the present invention will be apparent to the person skilled in the art.

The fungicidal composition may comprise one or more dispersants. Suitable dispersants are known in the art and are commercially available. Examples of suitable dispersants include, but are not limited to, DISPERSOGEN®1494, sodium lignosulphonate, sulfonated aromatic polymer, sodium salt and fatty alcohol polyglycol ether.

The fungicidal composition may comprise one or more wetting agents. Suitable wetting agents are known in the art and are commercially available. Examples of suitable wetting agents include, but are not limited to, sodium N-methyl-N-oleyl taurate, octylphenoxy polyethoxy ethanol, nonylphenoxy polyethoxy ethanol, sodium dioctyl sulfosuccinate, sodium dodecyl benzyl sulfonate, sodium lauryl sulfonate, sodium alkyl naphthalene sulfonate, sodium sulfonated alkyl carboxylate, and sodium alkyl naphthalene sulfonate.

The fungicidal composition may comprise one or more solvents. The solvent may be organic or inorganic. Suitable solvents are selected from customary solvents which thoroughly dissolve the agrochemically active substances employed. Suitable solvents are known in the art and are commercially available. Examples of suitable solvents include water; aromatic solvents, such as xylene (for example solvent products commercially available from SOLVESSO™); mineral oils; animal oils; vegetable oils; alcohols, for example methanol, butanol, pentanol, and benzyl alcohol; ketones,

for example cyclohexanone, and gamma-butyrolactone; pyrrolidones, such as NMP, and NOP; acetates, such as glycol diacetate; glycols; fatty acid dimethylamides; fatty acids; and fatty acid esters.

The fungicidal composition may further comprise one or more surfactants. Suitable surfactants are known in the art and include, but are not limited to, alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, arylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol, octylphenol, nonylphenol, alkylphenyl polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and methylcellulose and ethylene oxide/propylene oxide block copolymers. Suitable surfactants are commercially available.

The fungicidal composition may further comprise one or more polymeric stabilizers. Suitable polymeric stabilizers that may be used in the present invention include, but are not limited to, polypropylene, polyisobutylene, polyisoprene, copolymers of monoolefins and diolefins, polyacrylates, polystyrene, polyvinyl acetate, polyurethanes or polyamides. Suitable stabilizers are known in the art and are commercially available.

The fungicidal composition may further comprise one or more anti-foam agents. Suitable anti-foam agents include those substances which can normally be used for this purpose in agrochemical compositions and will be readily apparent to the person skilled in the art. Suitable anti-foam agents are known in the art and are commercially available. Particularly preferred anti-foam agents are mixtures of polydimethylsiloxanes and perfluroalkylphosphonic acids, such as the silicone anti-foam agents (for example commercially available from GE or Compton). Other examples of anti-foam agents are fatty acids, tallow, and sodium salts.

The fungicidal composition may further comprise one or more preservatives. Suitable preservatives include those substances which can normally be used for this purpose in agrochemical compositions of this type and again are well known in the art. Suitable examples that may be mentioned include PREVENTOL® (commercially available from Bayer AG) and PROXEL® (commercially available from Bayer AG).

The fungicidal composition may further comprise one or more antioxidants. Suitable antioxidants are substances which can normally be used for this purpose in agrochemical compositions, as is known in the art. Preference is given, for example, to butylated hydroxytoluene.

The fungicidal composition may further comprise one or more solid adherents. Such adherents are known in the art and available commercially. Suitable solid adherents include organic adhesives, including tackifiers, such as celluloses of substituted celluloses, natural and synthetic polymers in the form of powders, granules, or lattices, and inorganic adhesives such as gypsum, silica, or cement.

The fungicidal composition may further comprise one or more inert fillers. Such inert fillers are known in the art and available commercially. Suitable fillers include, for example, natural ground minerals, such as kaolins, aluminas, talc, chalk, quartz, attapulgite, montmorillonite, and diatomaceous earth, or synthetic ground minerals, such as highly dispersed silicic acid, aluminum oxide, silicates, and calcium phosphates and calcium hydrogen phosphates. Suitable inert fillers for granules include, for example, crushed and fractionated natural minerals, such as calcite, marble, pumice, sepiolite, and dolomite, or synthetic granules of inorganic and organic ground materials, as well as granules of organic material, such as sawdust, coconut husks, corn cobs, and tobacco stalks. Examples of inert fillers also include sodium tripolyphosphate and sucrose.

The fungicidal composition may further comprise one or more thickeners. Suitable thickeners include those substances which can normally be used for this purpose in agrochemical compositions. Examples of suitable thickeners include gums, such as xanthan gum, PVOH, cellulose and its derivatives, clay hydrated silicates, magnesium aluminum silicates or a mixture thereof. Again, such thickeners are known in the art and are available commercially.

The fungicidal composition may be provided in the form of several different formulations, for example, a water-soluble concentrate (SL), an emulsifiable concentrate (EC), an emulsion (EW), a micro-emulsion (ME), a suspension concentrate (SC), an oil-based suspension concentrate (OD), a flowable suspension (FS), a water-dispersible granule (WG), water-soluble granule (SG), a water-dispersible powder (WP), a water soluble powder (SP), granules (GR), encapsulated granules (CG), fine granules (FG), macrogranules (GG), an aqueous suspo-emulsion (SE), a capsule suspension (CS) and microgranules (MG). In certain embodiments, the formulation of the fungicidal composition is in the form of water-dispersible granules (WG).

Depending upon the formulation, the composition according to the invention may also comprise water.

Methods and techniques for applying the composition of the present invention are known in the art and will be understood by the person skilled in the art. Techniques include diluting or dispersing the composition in a suitable diluent or carrier liquid, in particular water, and applying the composition by spraying.

In the present invention, azoxystrobin and prothioconazole are applied to plants to treat and/or prevent fungal infestation. Prothioconazole and azoxystrobin may be applied in any desired sequence, or in any combination, consecutively or simultaneously. Co-application of prothioconazole and azoxystrobin can be achieved by obtaining from a separate formulation source and mixing together (known as a tank-mix, ready-to-apply, spray broth, or slurry), optionally with other pesticides, such as other fungicides, insecticides and nematicides, or by obtaining from a single formulation mixture source (known as a pre-mix, concentrate, formulated compound (or product)), and optionally mixing together with other pesticides, such as other fungicides, insecticides and nematicides. In one embodiment, azoxystrobin and prothioconazole are applied together in the form of a composition of the present invention.

In general, the application rate of the fungicidally active components depends on such factors as the specific active ingredient, the type of fungal infestation, the type of crop plant, soil type, season, climate, soil ecology and various other factors. The application rate of the active compounds for a given set of conditions can readily be determined by trials.

The application rate of the total amount of the fungicidally active compounds, components (A) prothioconazole and (B) azoxystrobin, may be any suitable rate to treat the target plants. The combination of azoxystrobin and prothioconazole may be applied in the range of from about 10 to 1000 g/ha of the total amount of active compounds, more preferably from 20 to 800 g/ha, still more preferably from 50 to 600 g/ha, more preferably still from 80 to 300 g/ha.

In certain embodiments, the application rate of prothioconazole is in a range of from 110 to 300 g/ha, more preferably 20 to 250 g/ha, still more preferably from 30 to 200 g/ha, more preferably still from 50 to 160 g/ha. Application rates of from 60 to 150 g/ha are particularly preferred for many embodiments. Specific application rates found to be effective include 50 g/ha, 61.25 g/ha and 122.5 g/ha.

In certain embodiments, the application rate of azoxystrobin is in a range of from 10 to 500 g/ha, more preferably from 30 to 300 g/ha, still more preferably from 50 to 200 g/ha. Application rates of from 60 to 180 g/ha are particularly preferred for many embodiments. Specific application rates found to be effective include 75 g/ha, 140 g/ha and 150 g/ha.

As indicated above, azoxystrobin is employed in a greater amount by weight than prothioconazole. The weight ratio of azoxystrobin to prothioconazole is greater than 1:1, still more preferably greater than 1.1:1, more preferably still greater than a.1.15:1, especially from 1.2:1. A weight ratio of azoxystrobin to prothioconazole of up to 5:1 is preferably employed, more preferably up to 4:1, still more preferably up to 3.5:1, especially up to 3:1. A weight ratio of azoxystrobin to prothioconazole of from 1.1:1 to 3:1 is preferred, more preferably from 1.15:1 to 3:1, still more preferably from 1.2:1 to 2.9:1, especially from 1.21:1 to 2.85:1. In one preferred embodiment, the weight ratio of azoxystrobin to prothioconazole is from 1.2:1 to 1.3:1, preferably about 1.22:1. In another preferred embodiment, the weight ratio of azoxystrobin to prothioconazole is from 2.7:1 to 2.9:1, preferably about 2.8:1.

The method of the present invention may be used to control fungal infestations in a range of plants, in particular crop plants. The crop plants include cereals, such as wheat, barley, rye, oats, rice, maize, sorghum, millet and manioc; beet, such as sugar beet and fodder beet; fruit, such as pomes, stone fruit and soft fruit, such as apples, pears, plums, peaches, almonds, cherries, or berries, for example, strawberries, raspberries and blackberries; leguminous plants, such as beans, lentils, peas and soybeans; oil plants, such as rape, mustard, poppy, olives, sunflowers, coconut, castor oil plants, cocoa beans and groundnuts; cucurbitaceae, such as marrows, cucumbers and melons; fibrous plants, such as cotton, flax, hemp and jute; citrus fruit, such as oranges, lemons, grapefruit and mandarins; vegetables, such as spinach, lettuce, asparagus, cabbages, carrots, onions, tomatoes, potatoes and paprika; lauraceae, such as avocados, cinnamon and camphor; and tobacco, nuts, coffee, aubergines, sugar cane, tea, pepper, vines, hops, bananas, natural rubber plants, eucalyptus, as well as ornamental plants. The present invention has been found to be particularly effective in the control or prevention of fungal infestations in leguminous plants, oil plants, cucurbitaceae, vegetables and fruit, in particular soybean, sunflower, tomato, cucumber and apple.

The methods of the present invention are effective in controlling a wide range of undesired fungal infestations, for example, but not limited to: *Colletotrichum* spp., *Alternaria* spp., *Cercospora* spp., *Mycosphaerella* spp., *Puccinia* spp., *Pythium* spp., *Mycoleptodiscus terrestris, Phakopsora pachyrhizi, Diaporthe phaseolorum, Diaporthe phaseolorum var. caulivora, Phomopsis phaseoli* [anamorph], *Erysiphe graminis, Sphaerotheca fuliginea, Pseudoperonospora cubensi, Phytophthora infestans, Alternaria solani, Leptosphaeria nodorum, Septoria tritici, Pyrenophora teres, Cladosporium carpophilum, Mycosphaerella arachidis, Rhizoctonia solani* and *Sclerotium rolfsii.*

The method and use of the present invention will be further illustrated by the following working examples.

Unless otherwise indicated, percentages are by weight.

## EXAMPLES

### Formulation Examples

Compositions of Examples 1 to 16 and the Control composition summarised in Table 1 below were prepared by the following methods (examples 1, 8, 9 and 12-16 are not according to the invention):

Water Dispersible Granules (WG)

Water-dispersible granules (WG) were prepared by intimately mixing different amounts of finely ground components (A) prothioconazole and (B) azoxystrobin with auxiliaries, grinding using a superfine mill and then granulating by paste extrusion to obtain the water-dispersible granules.

The auxiliaries included 2% w/w of MORWET® EFW POWDER (Sodium alkylnaphthalene sulfonate and anionic surfactant), 5% w/w of MORWET® D-425 POWDER (sodium alkylnaphthalenesulfonate-formaldehyde condensate), 1% w/w of AGNIQUE® SOAP L (fatty acids, tallow, sodium salts), and mannitol (balance to 100%).

In use, the water-dispersible granules were diluted to the desired concentration of fungicidally active components with water.

Emulsifiable Concentrate (EC)

An emulsifiable concentrate (EC) formulation was prepared by mixing (A) prothioconazole and (B) azoxystrobin with 5% w/w of ALKAMULS OR/36 (ethoxylated castor oil), and SOLVESSO® 200 (solvent: naphtha (petroleum), heavy aromatic; balance to 100%).

Emulsion Oil in Water (EW)

An emulsion, oil in water (EW) formulation was prepared by mixing finely ground active ingredients, (A) prothioconazole and (B) azoxystrobin, with auxiliaries, which included 8% w/w of propylene glycol, 5% w/w of RHODACAL 70 (calcium dodecylbenzenesulphonate), 2% w/w of ATLAS G-5000 (polyalkylene glycol ether), 1% w/w of ATLOX 4913 (acrylic copolymer solution), 2% of PVA-205 (polyvinyl alcohol), 40% of SOLVESSO® 200 (solvent: naphtha (petroleum), heavy aromatic) and water (balance to 100%).

Aqueous Suspension Concentrate (SC)

An aqueous suspension concentrate (SC) formulation was prepared by mixing finely ground (A) prothioconazole and (B) azoxystrobin with auxiliaries, which included 8% w/w of propylene glycol, 0.5% w/w of SAG 1529 (modified polydimethylsiloxane), 3% w/w of MORWET® D-425 POWDER (sodium alkylnaphthalenesulfonate, formaldehyde condensate), 2% w/w of ATLAS G-5000 (polyalkylene glycol ether), 0.2% of AG-RHO POL 23/W (xanthan gum), 0.1% w/w of NIPACIDE BIT 20 (1,2-benzisothiazol-3-one) and water (balance to 100%).

Table 1

| Example No. | Formulation type | Active ingredient | | Ratio of(A) : (B) | Application rate (g/ha) | |
|---|---|---|---|---|---|---|
| | | (A) prothioconazole (%) | (B) azoxystrobin (%) | | (A) prothioconazole | (B) azoxystrobin |
| 1 | WG | 32.5 | 32.5 | 1 : 1 | 65 | 65 |
| 2 | SC | 20 | 24.4 | 1 : 1.22 | 61.25 | 75 |
| 3 | SC | 15 | 30 | 1 : 2 | 35 | 70 |
| 4 | EC | 10 | 28 | 1: 2.8 | 50 | 140 |
| 5 | EC | 10 | 30 | 1 : 3 | 25 | 75 |
| 6 | EW | 5 | 20 | 1 : 4 | 17.5 | 70 |
| 7 | WG | 10 | 60 | 1 : 6 | 15 | 90 |
| 8 | SC | 30 | 10 | 3 : 1 | 90 | 30 |
| 9 | SC | 40 | 8 | 5 : 1 | 80 | 16 |
| 10 | SC | 20 | 24.4 | 1 : 1.22 | 122.5 | 150 |
| 11 | WG | 0 | 37.5 | / | 0 | 75 |

(continued)

| Example No. | Formulation type | Active ingredient | | Ratio of(A) : (B) | Application rate (g/ha) | |
|---|---|---|---|---|---|---|
| | | (A) prothioconazole (%) | (B) azoxystrobin (%) | | (A) prothioconazole | (B) azoxystrobin |
| 12 | WG | 61.25 | 0 | / | 61.25 | 0 |
| 13 | WG | 0 | 37.5 | / | 0 | 150 |
| 14 | WG | 61.25 | 0 | / | 122.5 | 0 |
| 15 | SC | 10 | 0 | / | 50 | 0 |
| 16 | SC | 0 | 28 | / | 0 | 140 |
| Control | SC | 0 | 0 | / | 0 | 0 |

Biological Examples

A synergistic effect exists with a combination of two active compounds when the activity of a composition comprising both active compounds is greater than the sum of the activities of the two active compounds applied individually. The expected activity for a given combination of two active compounds can be calculated by the so called "Colby equation" (see S.R. Colby, "Calculating Synergistic and Antagonistic Responses of Herbicide Combinations", Weeds 1967,15, 20-22):
whereby:

A = the activity percentage of compound A when active compound A is empolyed at an application rate of m g/ha;

B = the activity percentage of compound B when active compound B is empolyed at an application rate of n g/ha;

E = the percentage of estimated activity when compounds A and B are empolyed together at an application rate of m g/ha and n g/ha;

then:

$$E = A + B - (A \times B/100).$$

If the actual activity observed for the combination of compunds A and B is greater than that calculated, then the activity of the combination is superadditive. In other words, synergism is present.

Field Test 1 - Ranking of phytotoxicity

Soybean, apple, cucumber, tomato and sunflower plants were planted in beds of good agricultural peat-based growth medium and grown in separate greenhouses. After the plants had emerged and grown to a height of about 10cm (about 4 inches), separate beds of the plants were sprayed with the composition of one of Examples 1 to 16 and the Control at the application rates of the active ingredients indicated in Table 1 above.
After treatment of the plants, the beds were maintained for about 1 week under greenhouse conditions conducive for good plant growth.
Visual ratings of phytotoxicity were made after 1 week. Phytotoxicity was ranked 0 to 5 (5 = severe phytotoxicity, that is leaves and stems showed severe yellowing, burning, or necrosis; 0 = no phytotoxicity)
The results are set out in Table 2 below.

Table 2

| Example no. | Phytotoxicity Ranking (0 - 5) | | | | |
|---|---|---|---|---|---|
| | Soybean | Apple | Cucumber | Tomato | Sunflower |
| 1 | 3 | 2 | 3 | 3 | 3 |
| 2 | 0.5 | 0 | 0.5 | 0 | 0.5 |
| 3 | 2.5 | 3 | 3 | 2.5 | 2.5 |
| 4 | 1 | 1.5 | 1 | 1 | 1 |
| 5 | 3 | 5 | 3 | 3 | 2.5 |
| 6 | 4 | 4.5 | 3 | 2.5 | 3 |
| 7 | 4 | 5 | 3.5 | 3 | 3.5 |
| 8 | 4.5 | 3.5 | 5 | 4.5 | 4.5 |
| 9 | 4.5 | 3.5 | 4.5 | 4 | 4 |
| 10 | 0.5 | 0.5 | 0.5 | 0.5 | 0.5 |
| 11 | 3 | 5 | 4 | 3.5 | 3.5 |
| 12 | 3.5 | 3 | 4 | 4 | 4.5 |
| 13 | 4 | 5 | 4.5 | 4.5 | 4.5 |
| 14 | 4 | 3.5 | 4.5 | 4.5 | 4.5 |
| 15 | 3 | 3 | 3 | 3.5 | 3.5 |
| 16 | 3.5 | 4 | 5 | 4 | 4 |
| Control | 0 | 0 | 0 | 0 | 0 |

Field Test 2 - Efficacy test on soybean-soybean rust (*Phakopsora pachyrhizi*)

Soybean plants were sprayed with a conidial suspension of *Phakopsora pachyrhizi* and incubated at conditions of 20°C and 100% relative atmospheric humidity for 48 hours. The plants were then sprayed with compositions of Examples 2, 4, 10, 11, 12, 13, 14, 15, 16 and the Control set out in Table 1 above. The compositions were applied in amounts to give the application rates of the active compounds set out in Table 3 below.

Thereafter, the treated plants were held in a greenhouse at conditions of 15°C and 80% relative atmospheric humidity for 10 days, after which the severity of the fungal infestation was assessed. The efficacy of the composition in treating the fungal infestation was then determined.

The results of the efficacy of the fungicidal compositions are set out in Table 3 below.

Table 3

| Example No. | Ratio of (A) : (B) | Application rate (g/ha) | | Efficacy | Expected efficacy |
|---|---|---|---|---|---|
| | | (A) prothioconazole | (B) azoxystrobin | | |
| 2 | 1 : 1.22 | 61.25 | 75 | 95 | 48 |
| 4 | 1 : 2.8 | 50 | 140 | 95 | 57.5 |
| 10 | 1 : 1.22 | 122.5 | 150 | 98 | 78 |
| 11 | / | 0 | 75 | 35 | / |
| 12 | / | 61.25 | 0 | 20 | / |
| 13 | / | 0 | 150 | 60 | / |
| 14 | / | 122.5 | 0 | 45 | / |

(continued)

| Example No. | Ratio of (A) : (B) | Application rate (g/ha) | | Efficacy | Expected efficacy |
|---|---|---|---|---|---|
| | | (A) prothioconazole | (B) azoxystrobin | | |
| 15 | / | 50 | 0 | 15 | / |
| 16 | / | 0 | 140 | 50 | / |
| Control | / | 0 | 0 | 0 | / |

As can be seen from the data set out in Table 3 above, the combination of azoxystrobin and prothioconazole exhibited a significantly greater efficacy in the control of the fungal infestation than expected, using the Colby equation. These data indicate a synergistic effect arising from the combination of azoxystrobin and prothioconazole.

Field Test 3 - Efficacy test on Cucumber-Powdery mildew (*Sphaerotheca fuliginea*)

Cucumber plants were sprayed with a conidial suspension of *Sphaerotheca fuliginea* and incubated at conditions of 20°C and 100% relative atmospheric humidity for 48 hours. The plants were then sprayed with compositions of Examples 2, 4, 10, 11, 12, 13, 14, 15, 16 and the Control set out in Table 1. The compositions were applied in amounts to give the application rates of the active compounds set out in Table 4 below.

Thereafter, the treated plants were held in a greenhouse at conditions of 15°C and 80% relative atmospheric humidity for 10 days, after which the severity of the fungal infestation was assessed.

The results of the efficacy of the fungicidal compositions of the different formulations are set out in the Table 4 below.

Table 4

| Example No. | Ratio of (A) : (B) | Application rate (g/ha) | | Efficacy | Expected efficacy |
|---|---|---|---|---|---|
| | | (A) prothioconazole | (B) azoxystrobin | | |
| 2 | 1 : 1.22 | 61.25 | 75 | 94 | 47.5 |
| 4 | 1: 2.8 | 50 | 140 | 95 | 56 |
| 10 | 1 : 1.22 | 122.5 | 150 | 98 | 72.5 |
| 11 | / | 0 | 75 | 30 | / |
| 12 | / | 61.25 | 0 | 25 | / |
| 13 | / | 0 | 150 | 50 | / |
| 14 | / | 122.5 | 0 | 45 | / |
| 15 | / | 50 | 0 | 20 | / |
| 16 | / | 0 | 140 | 45 | / |
| Control | / | 0 | 0 | 0 | / |

As can be seen from the data set out in Table 4 above, the combination of azoxystrobin and prothioconazole exhibited a significantly greater efficacy in the control of the fungal infestation than expected, using the Colby equation. These data indicate a synergistic effect arising from the combination of azoxystrobin and prothioconazole.

Field Test 4 - Efficacy test on Apple- Alternaria rot (*Alternaria alternata*)

Apple (Pink Lady) plants were sprayed with a conidial suspension of *Alternaria alternata* and incubated at conditions of 20°C and 100% relative atmospheric humidity for 48 hours. The plants were then sprayed with compositions of Examples 2, 4, 10, 11, 12, 13, 14, 15, 16 and the Control set out in Table 1.

Thereafter, the treated plants were held in a greenhouse at conditions of 15°C and 80% relative atmospheric humidity for 10 days, after which the severity of the fungal infestation was assessed.

The results of the assessment of efficacy of the fungicidal compositions are set out in the Table 5 below.

Table 5

| Example No. | Ratio of (A) : (B) | Application rate (g/ha) | | Efficacy | Expected efficacy |
|---|---|---|---|---|---|
| | | (A) prothioconazole | (B) azoxystrobin | | |
| 2 | 1 : 1.22 | 61.25 | 75 | 90 | 40.5 |
| 4 | 1: 2.8 | 50 | 140 | 90 | 44 |
| 10 | 1 : 1.22 | 122.5 | 150 | 95 | 65 |
| 11 | / | 0 | 75 | 15 | / |
| 12 | / | 61.25 | 0 | 30 | / |
| 13 | / | 0 | 150 | 30 | / |
| 14 | / | 122.5 | 0 | 50 | / |
| 15 | / | 50 | 0 | 20 | / |
| 16 | / | 0 | 140 | 30 | / |
| Control | / | 0 | 0 | 0 | / |

As can be seen from the data set out in Table 5 above, the combination of azoxystrobin and prothioconazole exhibited a significantly greater efficacy in the control of the fungal infestation than expected, using the Colby equation. These data indicate a synergistic effect arising from the combination of azoxystrobin and prothioconazole.

Field Test 5 - Efficacy test on tomato- Rhizoctonia damping-off and fruit rot (*Rhizoctonia solani*)

Tomato plants were sprayed with a conidial suspension of *Rhizoctonia solani* and incubated at conditions of 20°C and 100% relative atmospheric humidity for 48 hours. The plants were then sprayed with compositions of Examples 2, 4, 10, 11, 12, 13, 14, 15, 16 and the Control set out in Table 1 above.

Thereafter, the treated plants were held in a greenhouse at conditions of 15°C and 80% relative atmospheric humidity for 10 days, after which the severity of the fungal infestation was assessed.

The results of the assessment of the efficacy of the fungicidal compositions are set out in the Table 6 below.

Table 6

| Example No. | Ratio of (A) : (B) | Application rate (g/ha) | | Efficacy | Expected efficacy |
|---|---|---|---|---|---|
| | | (A) prothioconazole | (B) azoxystrobin | | |
| 2 | 1 : 1.22 | 61.25 | 75 | 90 | 44 |
| 4 | 1: 2.8 | 50 | 140 | 92 | 57.5 |
| 10 | 1 : 1.22 | 122.5 | 150 | 96 | 75.25 |
| 11 | / | 0 | 75 | 30 | / |
| 12 | / | 61.25 | 0 | 20 | / |
| 13 | / | 0 | 150 | 55 | / |
| 14 | / | 122.5 | 0 | 45 | / |
| 15 | / | 50 | 0 | 15 | / |
| 16 | / | 0 | 140 | 50 | / |
| Control | / | 0 | 0 | 0 | / |

As can be seen from the data set out in Table 6 above, the combination of azoxystrobin and prothioconazole

exhibited a significantly greater efficacy in the control of the fungal infestation than expected, using the Colby equation. These data indicate a synergistic effect arising from the combination of azoxystrobin and prothioconazole.

Example 7 - Efficacy test on sunflower- downy mildew (*Plasmopara halstedii*)

Tomato plants were sprayed with a conidial suspension of *Plasmopara halstedii* and incubated at conditions of 20°C and 100% relative atmospheric humidity for 48 hours. The plants were then sprayed with compositions of Examples 2, 4, 10, 11, 12, 13, 14, 15, 16 and the Control set out in Table 1 above.
Thereafter, the treated plants were held in a greenhouse at conditions of 15°C and 80% relative atmospheric humidity for 10 days, after which the severity of the fungal infestation was assessed.
The results of the assessment of the efficacy of the fungicidal compositions are set out in the Table 7 below.

Table 7

| Example No. | Ratio of (A) : (B) | Application rate (g/ha) | | Efficacy | Expected efficacy |
|---|---|---|---|---|---|
| | | (A) prothioconazole | (B) azoxystrobin | | |
| 2 | 1 : 1.22 | 61.25 | 75 | 90 | 44.75 |
| 4 | 1: 2.8 | 50 | 140 | 92 | 61.75 |
| 10 | 1 : 1.22 | 122.5 | 150 | 96 | 76 |
| 11 | / | 0 | 75 | 35 | / |
| 12 | / | 61.25 | 0 | 15 | / |
| 13 | / | 0 | 150 | 60 | / |
| 14 | / | 122.5 | 0 | 40 | / |
| 15 | / | 50 | 0 | 15 | / |
| 16 | / | 0 | 140 | 55 | / |
| Control | / | 0 | 0 | 0 | / |

As can be seen from the data set out in Table 7 above, the combination of azoxystrobin and prothioconazole exhibited a significantly greater efficacy in the control of the fungal infestation than expected, using the Colby equation. These data indicate a synergistic effect arising from the combination of azoxystrobin and prothioconazole.

## Claims

1. A method for reducing the phytotoxicity of prothioconazole, the method comprising employing the prothioconazole in combination with azoxystrobin, wherein azoxystrobin and prothioconazole are employed in a weight ratio of greater than 1:1.

2. A method for reducing the phytotoxicity of azoxystrobin, the method comprising employing the azoxystrobin in combination with prothioconazole.

3. The method according to either of claims 1 or 2, wherein azoxystrobin and prothioconazole are employed in a weight ratio of from 1.1:1 to 3:1.

4. The use of prothioconazole to reduce the phytotoxicity of azoxystrobin, wherein azoxystrobin and prothioconazole are employed in a weight ratio of greater than 1:1.

5. The use of azoxystrobin to reduce the phytotoxicity of prothioconazole, wherein azoxystrobin and prothioconazole are employed in a weight ratio of greater than 1:1.

6. The use of either of claims 4 or 5, wherein azoxystrobin and prothioconazole are employed in a weight ratio of from 1.1:1 to 3:1.

## Patentansprüche

1. Verfahren zur Reduktion der Phytotoxizität von Prothioconazol, wobei das Verfahren die Verwendung des Prothioconazols in Kombination mit Azoxystrobin umfasst, wobei Azoxystrobin und Prothioconazol in einem Gewichtsverhältnis von mehr als 1 : 1 verwendet werden.

2. Verfahren zur Reduktion der Phytotoxizität von Azoxystrobin, wobei das Verfahren die Verwendung des Azoxystrobins in Kombination mit Prothioconazol umfasst.

3. Verfahren nach einem der Ansprüche 1 oder 2, wobei Azoxystrobin und Prothioconazol in einem Gewichtsverhältnis von 1,1 : 1 bis 3 : 1 verwendet werden.

4. Verwendung von Prothioconazol zur Reduktion der Phytotoxizität von Azoxystrobin, wobei Azoxystrobin und Prothioconazol in einem Gewichtsverhältnis von mehr als 1 : 1 verwendet werden.

5. Verwendung von Azoxystrobin zur Reduktion der Phytotoxizität von Prothioconazol, wobei Azoxystrobin und Prothioconazol in einem Gewichtsverhältnis von mehr als 1 : 1 verwendet werden.

6. Verwendung nach einem der Ansprüche 4 oder 5, wobei Azoxystrobin und Prothioconazol in einem Gewichtsverhältnis von 1,1 : 1 bis 3 : 1 verwendet werden.

## Revendications

1. Procédé pour réduire la phytotoxicité du prothioconazole, le procédé comprenant l'emploi du prothioconazole en combinaison avec de l'azoxystrobine, dans lequel l'azoxystrobine et le prothioconazole sont employés en un rapport en poids supérieur à 1:1.

2. Procédé pour réduire la phytotoxicité de l'azoxystrobine, le procédé comprenant l'emploi de l'azoxystrobine en combinaison avec du prothioconazole.

3. Procédé selon l'une ou l'autre des revendications 1 ou 2, dans lequel l'azoxystrobine et le prothioconazole sont employés en un rapport en poids de 1,1:1 à 3:1.

4. Utilisation de prothioconazole pour réduire la phytotoxicité de l'azoxystrobine, dans laquelle l'azoxystrobine et le prothioconazole sont employés en un rapport en poids supérieur à 1:1.

5. Utilisation d'azoxystrobine pour réduire la phytotoxicité du prothioconazole, dans laquelle l'azoxystrobine et le prothioconazole sont employés en un rapport en poids supérieur à 1:1.

6. Utilisation selon l'une ou l'autre des revendications 4 ou 5, dans laquelle l'azoxystrobine et le prothioconazole sont employés en un rapport en poids de 1,1:1 à 3:1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 104621130
- CN 106889091
- WO 21012021214 A
- WO 9847367 A
- WO 2009000407 A


### Non-patent literature cited in the description


- **SABBERT, T.J.** Tier I Seedling Emergence and Vegetative Vigor Non-Target Phytotoxicity Study Using JAU 6476 480SC. *PMRA Submission No.: 2004-0844,* 2004
- **WIN COWGILL.** Not Understanding Phytotoxicity Can Damage Your Bottom Line. *Fruit Notes,* 2013, vol. 78
- **S.R. COLBY.** Calculating Synergistic and Antagonistic Responses of Herbicide Combinations. *Weeds,* 1967, vol. 15, 20-22